# FASCICULE DE BREVET EUROPEEN

(11) **EP 2 702 650 B1**
(45) Date de publication et mention de la délivrance du brevet: **15.08.2018**
(21) Numéro de dépôt: 12725058.7
(22) Date de dépôt: 26.04.2012
(51) Int. Cl.: H01S 3/0975, H01S 3/032, H01S 3/22, H05H 1/46, H01J 65/04, H01S 3/067, G02B 6/02, H01S 1/06

(54) **DISPOSITIF D'EXCITATION D'UNE COLONNE DE GAZ ENFERMEE DANS UNE FIBRE OPTIQUE A COEUR CREUX**
VORRICHTUNG ZUR ANREGUNG EINER IN EINER OPTISCHEN HOHLKERNFASER EINGESCHLOSSENEN GASSÄULE
DEVICE FOR THE EXCITATION OF A GAS COLUMN ENCLOSED IN A HOLLOW-CORE OPTICAL FIBRE

(30) Priorité: 29.04.2011 FR 1153677
(43) Date de publication de la demande: 05.03.2014
(73) Titulaire: Université de Limoges, 87032 Limoges Cedex (FR)
(72) Inventeur: BENABID, Fetah, 87570 Rilhac Rancon (FR); BLONDY, Jean-Marc, 87100 Landouge (FR); DEBORD, Benoit, 87000 Limoges (FR); GERÔME, Frédéric, 87000 Limoges (FR); JAMIER, Raphael, 87000 Limoges (FR); LEPRINCE, Philippe, 91190 Gif-sur-Yvette (FR)
(74) Mandataire: Aquinov
(86) Numéro de dépôt international: PCT/FR2012/050927
(87) Numéro de publication internationale: WO 2012/146874

(56) Documents cités:
- EP-A1- 0 197 843
- EP-A1- 0 653 778
- US-A- 3 493 845
- US-A1- 2007 280 304
- MOUTOULAS C ET AL: "A HIGH-FREQUENCY SURFACE WAVE PUMPED HE-NE LASER", APPLIED PHYSICS LETTERS, AIP, AMERICAN INSTITUTE OF PHYSICS, MELVILLE, NY, US, vol. 46, no. 4, 1 février 1985 (1985-02-01), pages 323-325, XP000706386, ISSN: 0003-6951, DOI: 10.1063/1.95618
- RUDOLPH W ET AL: "Mid-IR laser emission from a C2H2 gas filled hollow core fiber", TRANSPARENT OPTICAL NETWORKS (ICTON), 2010 12TH INTERNATIONAL CONFERENCE ON, IEEE, PISCATAWAY, NJ, USA, 27 juin 2010 (2010-06-27), pages 1-4, XP031733164, ISBN: 978-1-4244-7799-9
- HÖLZER P ET AL: "4% conversion of sub-microJ near-IR pulses to deep UV in fundamental mode of Ar-filled PCF", 2010 CONFERENCE ON LASERS AND ELECTRO-OPTICS (CLEO) 16-21 MAY 2010 SAN JOSE, CA, USA,, 16 mai 2010 (2010-05-16), pages 1-2, XP031700636, ISBN: 978-1-55752-890-2
- DEBORD B ET AL: "First ignition of an UV microwave microplasma in Ar-filled hollow-core photonic crystal fibers", 2011 37TH EUROPEAN CONFERENCE AND EXHIBITION ON OPTICAL COMMUNICATION (ECOC 2011) IEEE PISCATAWAY, NJ, USA, 2011, page 3 pp., XP002684114, ISBN: 978-1-4577-1918-9
- GARCIA M ET AL: "Spectroscopic study of a surface-wave-sustained argon plasma column at atmospheric pressure by means of a power interruption technique", SPECTROCHIMICA ACTA. PART B: ATOMIC SPECTROSCOPY, NEW YORK, NY, US, US, vol. 55, no. 10, 2 octobre 2000 (2000-10-02), pages 1611-1621, XP027379613, ISSN: 0584-8547 [extrait le 2000-10-02]
- KONENKOV V VN ET AL: "STUDY OF MICROWAVE-EXCITED HE-NE LASER", RADIO ENGINEERING AND ELECTRONIC PHYSICS, SCRIPTA PUBLISHING CO. WASHINGTON, US, vol. 26, no. 11, 1 novembre 1981 (1981-11-01), pages 70-73, XP000711734,

## Description

La présente invention se rapporte à un dispositif d'excitation d'une colonne de gaz enfermée dans une fibre optique à coeur creux permettant d'obtenir notamment une source de lumière ou une source laser.

Dans le domaine des sources lasers, il existe plusieurs familles :
La première famille comprend les diodes lasers qui sont compactes et peu couteuses. Cependant, ces sources lasers sont limitées à des plages spectrales fragmentées de longueurs d'onde conventionnelles allant de 0,4 *µ*m à 2 *µ*m. Ce type de lasers peut être utilisé par exemple comme source de pompe pour des lasers plus encombrants tels que les lasers de type cristallin.
La deuxième famille comprend les lasers de type cristallin ou ionique qui utilisent un milieu solide comme milieu d'émission, dopé par des ions. Ce type de lasers est relativement couteux et encombrant et les longueurs d'onde d'émission sont limitées aux transitions radiatives des ions (notamment des ions de terres rares) dopant le milieu solide et/ou au spectre d'émission du milieu solide.
La troisième famille comprend les lasers à gaz qui visent à exciter une colonne de gaz enfermée dans un tube ou dans une cuve. Selon l'art antérieur, ce type de lasers a pour avantage de générer un faisceau émettant à des longueurs d'onde inaccessibles par les lasers solides cités ci-dessus. Notamment, les longueurs d'ondes des lasers à gaz peuvent être dans l'ultraviolet pour les lasers excimères, dans le visible pour les lasers Argon, HE-NE, dans l'infrarouge pour les lasers *CO*₂. Pour ce type de lasers, la longueur d'onde du faisceau généré dépend de la composition et de la pression du mélange de gaz présent dans le tube ou dans la cuve.

Même si cette conception de laser permet d'obtenir des faisceaux avec des longueurs d'onde comprises dans un spectre large, il n'est pas pleinement satisfaisant pour deux raisons essentiellement.

Dans un laser à gaz, la décharge électroluminescente découle d'un champ électrique longitudinal entre deux électrodes disposées à l'intérieur et à chacune des extrémités d'un tube contenant le gaz. Les électrodes placées dans le gaz tendent à se corroder et à contaminer le milieu. Par conséquent, il est nécessaire de nettoyer fréquemment ces électrodes ce qui tend à augmenter fortement les coûts d'exploitation d'un tel laser.

Selon un deuxième inconvénient, le rayonnement émis par ce type de laser n'est pas guidé mais en espace libre. Par conséquent, il est nécessaire de prévoir un jeu complexe d'éléments optiques pour déporter le faisceau lumineux vers sa cible, ce qui conduit à des systèmes complexes et encombrants, difficiles à régler et à entretenir. Enfin, la configuration d'interaction en espace libre entre l'excitation et le gaz limite fortement l'efficacité du laser (faible rendement optique). Compte tenu des principales caractéristiques des lasers de l'art antérieur, certains besoins industriels ne sont pas satisfaits dans la mesure où il n'existe pas un laser compact et peu coûteux à la manière d'un laser à diode, susceptible d'émettre un faisceau avec une longueur d'onde non conventionnelle, notamment dans l'ultraviolet, à la manière d'un laser à gaz.

Compte tenu de la capacité des lasers à gaz à générer des faisceaux lumineux avec des longueurs d'onde dans un large spectre, l'invention vise à proposer une source laser à gaz peu encombrante avec à la fois une réduction des coûts d'exploitation et une augmentation drastique concernant le rendement optique. Dans le domaine des plasmas, on connait un dispositif d'excitation d'une colonne de gaz enfermée dans un tube, appelé « Surfatron », sans électrodes placées à l'intérieur du tube. Un tel dispositif est notamment décrit dans le brevet FR-2.290.126.

Selon ce document, le mélange gazeux est disposé dans un tube creux avec un diamètre minimal de 2 mm. Le dispositif d'excitation comprend une enceinte métallique, coaxiale au tube, délimitée par une première paroi cylindrique dont le diamètre intérieur est ajusté à celui du tube, une seconde paroi cylindrique espacée et coaxiale à la première paroi cylindrique et deux parois latérales. Selon une caractéristique de ce dispositif, un espace annulaire est ménagé entre la première paroi cylindrique et une paroi latérale dite fine car moins épaisse que l'autre paroi latérale. En complément de l'enceinte métallique, le dispositif d'excitation comprend un organe de couplage sous forme d'une plaque métallique disposée dans l'enceinte à proximité de la première paroi cylindrique et de l'espace annulaire. L'organe de couplage est relié à une alimentation apte à fournir un signal haute fréquence d'excitation par un câble coaxial dont un fil est relié à la plaque métallique et l'autre à la seconde paroi cylindrique.

Selon ce document, en fournissant un signal avec une fréquence comprise entre 100 et 1500 Mhz, il est possible de créer dans l'enceinte annulaire un champ électrique dont la direction à proximité de l'espace annulaire est parallèle à l'axe du tube contenant le gaz et engendre des ondes de surface aptes, si la puissance de l'alimentation est suffisante, à ioniser le gaz contenu dans le tube.

Selon ce document, ce type de dispositif d'excitation associé à un tube fermé à chaque extrémité contenant un gaz peut constituer une source de lumière. A son tour, cette source de lumière peut être utilisée en tant qu'excitateur d'un milieu solide pour former un laser de type ionique.

Le dispositif décrit dans le document FR-2.290.126 a pour inconvénient d'émettre un rayonnement non guidé (en espace libre), la fonction du tube étant limitée au rôle d'enceinte pour le gaz et le plasma.

Un autre dispositif d'excitation décrit dans le brevet FR-2.579.855 a été développé afin d'obtenir un effet laser en excitant un milieu gazeux.

Selon ce document, le mélange gazeux est stocké dans un tube avec un diamètre intérieur de l'ordre de 1,5 mm et le dispositif d'excitation comprend un applicateur micro-onde susceptible de générer à l'extérieur du tube contenant le gaz des ondes de surface aptes à produire un plasma à l'intérieur du tube.

Le dispositif décrit dans ce document répond à un objectif de l'invention à savoir fournir un dispositif d'excitation susceptible de générer un effet laser dans un milieu gazeux qui peut donc en fonction de la composition et de la pression du gaz avoir une longueur d'onde non conventionnelle.

Cependant, le dispositif illustré dans le brevet FR-2.579.855 n'est pas compact puisque le dispositif d'excitation s'étend sur une longueur de l'ordre de 14 cm. Selon une autre problématique, la puissance micro-onde appliquée est relativement importante et supérieure à 200 Watts. Enfin, le rayonnement émis par ce dispositif n'est pas guidé mais est en espace libre, la fonction du tube proposé dans le brevet FR-2.579.855 étant limitée au rôle d'enceinte pour le gaz et le plasma.

Le document US-2007/0280304 décrit un dispositif d'excitation d'un milieu gazeux contenu dans une enveloppe dont le diamètre est compris entre 500 et 750 *µ*m. Le dispositif d'excitation comprend un système disposé à l'extérieur de l'enveloppe susceptible de générer un champ électromagnétique au niveau du milieu gazeux. Ce système d'excitation se présente sous la forme d'une bobine enroulée autour de l'enveloppe. Ce mode d'excitation n'offre pas de contrôle particulier sur le plasma généré. Par conséquent, ce mode de réalisation n'est pas performant car il ne comprend aucun moyen pour optimiser le couplage de l'excitation électromagnétique avec le milieu gazeux si bien que les risques de détérioration de l'enveloppe en raison des températures élevées du plasma sont très importants.

Aussi, la présente invention vise à pallier les inconvénients de l'art antérieur en proposant un dispositif d'excitation d'un milieu gazeux compact, avec une faible consommation énergétique.

A cet effet, l'invention a pour objet un dispositif d'excitation d'un milieu gazeux contenu dans une enveloppe, ledit dispositif étant couplé à ladite enveloppe et disposé à l'extérieur de ladite enveloppe et comprenant un applicateur susceptible de générer sur au moins une portion de ladite enveloppe une excitation latérale à l'intérieur de ladite enveloppe, caractérisé en ce que l'enveloppe est une structure diélectrique photonique à coeur creux dont le coeur a un diamètre inférieur à 300 *µ*m et en ce que l'applicateur est de type micro-onde et permet de générer une onde de surface apte à créer et confiner un micro-plasma à partir du milieu gazeux contenu dans l'enveloppe.

Selon un autre objectif, l'invention vise à proposer une source laser à gaz compacte, dont le rayonnement généré est guidé, avec un faible coût d'exploitation.

D'autres caractéristiques et avantages ressortiront de la description qui va suivre de l'invention, description donnée à titre d'exemple uniquement, en regard des dessins annexés sur lesquels :
- La figure 1 est un schéma d'une source lumineuse localisée selon l'invention,
- La figure 2 est un schéma d'une source laser selon l'invention,
- La figure 3 est un schéma d'un dispositif d'excitation selon une première variante de l'invention,
- La figure 4A est un schéma d'un dispositif d'excitation selon une autre variante de l'invention,
- La figure 4B est un schéma d'un dispositif d'excitation selon une autre variante de l'invention,
- La figure 4C est un schéma d'un dispositif d'excitation selon une autre variante de l'invention,
- La figure 5A est une section d'un premier exemple de fibre utilisée pour contenir le milieu gazeux selon l'invention,
- La figure 5B est une section d'un autre exemple de fibre utilisée pour contenir le milieu gazeux selon l'invention,
- La figure 6 est une section d'un autre exemple de fibre utilisée pour contenir le milieu gazeux selon l'invention,
- La figure 7 est un schéma d'une source laser selon une autre variante de l'invention, et
- La figure 8 est un schéma d'une source laser selon une autre variante de l'invention.

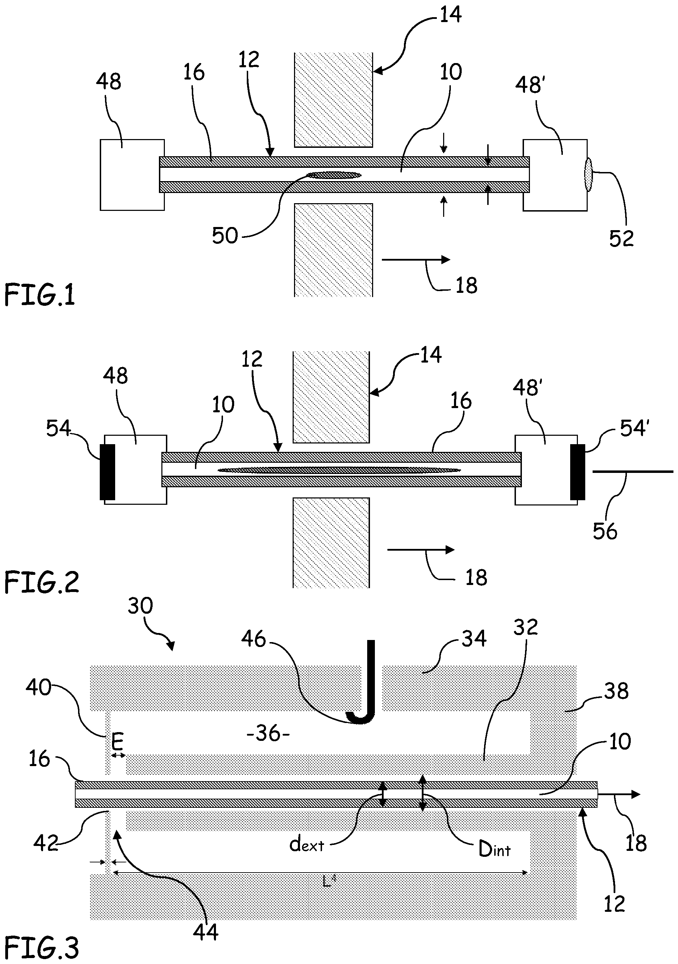

Sur les figures 1 et 2, on a représenté un milieu gazeux 10 contenu dans une enveloppe 12 couplée à un dispositif d'excitation 14.

Pour la suite de la description, on entend par un milieu gazeux un gaz ou un mélange de plusieurs gaz, caractérisé entre autre par une composition et une pression variant de 0,01 mbar à 50 bars.

Selon une caractéristique de l'invention, l'enveloppe 12 comprend une fibre optique à coeur creux 16. Selon un point important de l'invention, le diamètre du coeur creux de la fibre optique est inférieur à 300 *µ*m. De préférence, le diamètre du coeur de la fibre optique varie de 1 à 200 *µ*m. Avantageusement, l'épaisseur du pont de silice qui entoure le coeur est inférieure à 5 *µ*m, de préférence comprise entre 100 nm et 1 *µ*m.

La fibre optique à coeur creux 16 se caractérise notamment par le diamètre de son coeur creux et par des paramètres opto-géométriques liés essentiellement à la nature de la gaine entourant le coeur creux.

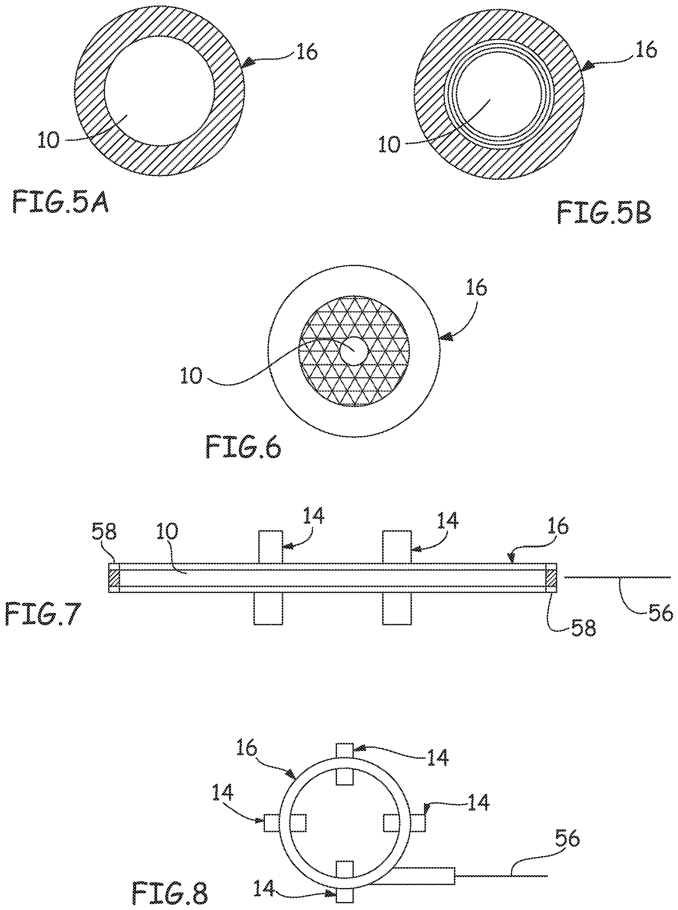

Selon les cas, la fibre optique peut avoir un corps creux cylindrique et se présenter sous la forme d'un capillaire diélectrique, comme illustré sur la figure 5A, ou d'un capillaire diélectrique plus complexe avec un trou d'air entouré d'une gaine diélectrique multicouches comme illustré sur la figure 5B, ou la fibre optique peut être une fibre optique microstructurée dont un exemple de structure est illustré sur la figure 6. Bien entendu, l'invention n'est pas limitée à la structure décrite sur la figure 6.

En variante, la fibre optique peut être remplacée par toute structure diélectrique photonique à coeur creux.

Selon une autre caractéristique de l'invention, le dispositif d'excitation 14 est couplé à la fibre optique à coeur creux 16 et disposé à l'extérieur de ladite fibre et comprend un applicateur de type micro-onde susceptible de générer sur au moins une portion de ladite fibre optique à coeur creux 16 une excitation latérale permettant de produire à l'intérieur de la fibre optique à coeur creux un micro-plasma à partir du milieu gazeux 10.

Selon un point important de l'invention, l'applicateur de type micro-onde permet de générer une onde de surface dont la distribution spatiale est sensiblement tubulaire, coaxiale à la fibre optique et dont le pic d'intensité est localisé au niveau de l'interface entre le plasma et le pourtour du coeur creux 16. Ainsi, l'onde de surface se propage au niveau de cette interface et génère une colonne de plasma fortement localisée dans une structure micrométrique, sans aucun dommage sur le matériau de ladite structure qui serait endommagée en l'absence d'onde de surface par la température du plasma qui est de l'ordre de 1500°C. Selon un autre avantage, l'onde de surface peut se propager sur plusieurs centimètres ce qui permet de créer une colonne de micro-plasma relativement longue.

Selon une caractéristique de l'invention, la fréquence de l'applicateur micro-onde varie de 50 MHz à 10 6Hz.

Pour la suite de la description, on entend par une excitation latérale que les champs générés par le dispositif d'excitation 14 à la surface de la fibre optique 16 ou au niveau du coeur de la fibre sont essentiellement orientés parallèlement à la direction longitudinale 18 de la fibre (la direction longitudinale correspondant à la plus grande dimension de la fibre).

Grâce à cette voie d'excitation microonde, plus de 90 % de l'énergie microonde se trouvant dans l'excitateur est transférée à la colonne de gaz.

Cette colonne de gaz excitée forme une onde plasma qui a son tour émet la lumière.

Compte tenu de la nature de l'enveloppe 12 qui se présente sous la forme d'une fibre optique à coeur creux avec une atténuation linéique inférieure à 10 dB/m, on obtient un rendement optique nettement supérieur à celui obtenu avec une enveloppe sous la forme d'un simple tube.

De plus, grâce à un accord optimal entre l'onde plasma et le mode guidé dans la fibre, plus de 90% de la lumière émise par le plasma est guidée par la fibre.

La combinaison de la dimension du coeur creux de la fibre et la nature du mode d'excitation à savoir une excitation latérale produite par un applicateur microonde dont la fréquence est comprise entre 50 MHz à 10 6Hz permet d'obtenir un dispositif d'excitation d'un milieu gazeux 10 compact puisque la portion de la fibre 16 au niveau de laquelle doit être appliquée l'excitation latérale peut être inférieure à 5 cm, avec une faible consommation énergétique puisque la puissance apportée à l'excitateur est inférieure à 100 W.

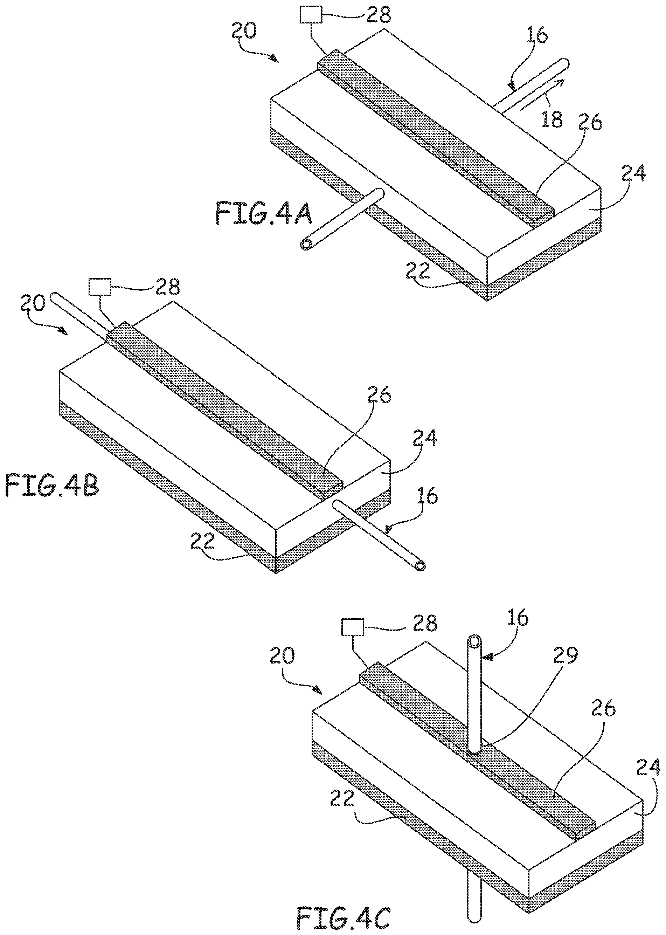

Selon les variantes, l'excitation latérale peut être appliquée sur toute la périphérie de la fibre optique à coeur creux 16 ou seulement sur une partie. Selon les cas, le dispositif d'excitation peut être coaxial comme illustré sur la figure 3 ou être sensiblement plan comme illustré sur les figures 4A, 4B, 4C. Selon l'exemple illustré sur la figure 4A, le dispositif d'excitation 14 peut se présenter sous la forme d'une ligne microruban 20 comprenant de manière connue un plan de masse 22, une couche diélectrique 24, une ligne conductrice 26 et une commande 28 (représentée de manière schématique), la fibre optique à coeur creux 16 étant disposée entre le plan de masse 22 et la ligne conductrice 26, perpendiculairement à ladite ligne conductrice 26, la commande 28 étant réglée de manière à obtenir un champ électrique maximum au niveau du coeur de la fibre optique à coeur creux 16. En variante, comme illustré sur la figure 4B, la fibre optique 26 peut être disposée parallèlement à la ligne conductrice 26.

En variante, comme illustré sur la figure 4C, la fibre optique 16 est disposée perpendiculairement à la ligne conductrice 26 et au plan masse 22, la ligne microruban comprenant un orifice 29 (dont le diamètre est légèrement supérieur à celui de la fibre) pour permettre le passage de la fibre 16 et émettant un champ électrique parallèle à l'axe de la fibre 16.

Selon un autre mode de réalisation illustré sur la figure 3, le dispositif de d'excitation est coaxial et se présente sous la forme d'un surfatron 30 qui reproduit les éléments décrits dans le brevet FR-2.290.126 avec des dimensions différentes.

Ainsi, le dispositif d'excitation 30 comprend une première paroi cylindrique creuse 32 avec un diamètre intérieur Dint légèrement supérieur au diamètre extérieur dext de la fibre 16, une seconde paroi cylindrique creuse 34 coaxiale et distante de la première paroi cylindrique 32 de manière à délimiter une enceinte métallique 36 annulaire coaxiale à la fibre 16, fermée à une première extrémité par une première paroi latérale 38 disposée dans un plan perpendiculaire à la direction longitudinale de la fibre 16 reliant les parois cylindriques 32 et 34 et à l'autre extrémité par une seconde paroi latérale 40 disposée dans un plan perpendiculaire à la direction longitudinale de la fibre, reliée à la seconde paroi cylindrique creuse 34 avec un orifice 42 central dont le diamètre est sensiblement identique à Dint. Selon un point important, un espace annulaire 44 sépare l'extrémité de la première paroi cylindrique creuse 32 et la seconde paroi latérale 40. En complément, le dispositif d'excitation comprend une alimentation (non représentée) apte à fournir un signal haute fréquence d'excitation par un câble coaxial dont un fil est relié à un élément métallique 46 disposé dans l'enceinte métallique 36 et l'autre à la seconde paroi cylindrique 34. Selon une caractéristique de l'invention, l'élément métallique 46 se présente sous forme d'une boucle comme illustré sur la figure 3. Cette boucle s'étend dans un plan contenant la direction longitudinale de la fibre 16 et a une forme en U à l'intérieur de l'enceinte métallique. Cette géométrie de l'élément métallique permet d'obtenir un champ électrique homogène à l'intérieur de l'enceinte. L'alimentation et l'élément métallique disposé dans l'enceinte métallique ne sont pas plus détaillés car ils sont connus du brevet FR-2.290.126.

Appliqué à une fibre optique à coeur creux 16, le dispositif d'excitation 30 a de préférence les caractéristiques suivantes :
L'espace annulaire 44 a de préférence une longueur E variant de 1 à 5 mm en fonction du diamètre extérieur de la fibre 16.

Le diamètre intérieur Dint de la paroi cylindrique creuse 32 doit être légèrement supérieur au diamètre extérieur de la fibre 16, de préférence l'espace entre la face extérieure de la fibre 16 et la face intérieure de la paroi 32 doit être inférieur à 2 mm. Cette caractéristique permet d'optimiser le couplage du dispositif d'excitation 14 et de la fibre 16 et de limiter les risques d'échauffement localisé de la fibre 16.

Selon un autre aspect, la longueur L de l'enceinte 36 est déterminée pour que le dispositif d'excitation soit résonant. Ainsi la longueur L doit être sensiblement égale à λ/4+n×λ/2, n étant un entier et λ la longueur d'onde d'excitation.

Selon les applications, la seconde paroi latérale 40 est plus ou moins épaisse. Ainsi, cette paroi peut avoir une épaisseur de plusieurs millimètres pour une source de lumière localisée ou une épaisseur la plus fine possible et de l'ordre de 1 mm pour une source laser.

L'invention n'est pas limitée aux modes de réalisation des dispositifs d'excitation décrits ci-dessus mais couvre tous les dispositifs d'excitation susceptibles de générer en surface de la fibre à coeur creux ou dans le coeur creux de la fibre optique un champ électrique dont la composante selon la direction longitudinale de la fibre est suffisante pour produire un plasma à partir du milieu gazeux 10 sans élément disposé à l'intérieur de la fibre 16. En effet, dans le cas contraire à savoir si le champ électrique était généré par deux électrodes disposées dans le coeur de la fibre, il serait difficile de contrôler la décharge au cours du temps en raison d'une accumulation excessive de charges sur les parois délimitant le coeur creux de la fibre optique.

Selon une première variante illustrée sur les figures 1 et 2, l'enveloppe 12 comprenant le milieu gazeux n'est pas limitée à la fibre optique à coeur creux. Dans ce cas, la fibre à coeur creux 16 débouche à une de ses extrémités dans une cavité 48, l'autre extrémité étant obturée ou débouche à chacune de ses extrémités dans une cavité 48, 48'. Dans ce cas, le milieu gazeux peut être introduit dans l'enveloppe 12 via au moins une des cavités 48, 48'.

Selon une autre variante illustrée sur les figures 7 et 8, l'enveloppe 12 contenant le milieu gazeux est constituée d'une fibre optique à coeur creux 16 obturée à chaque extrémité. Dans ce cas, on peut utiliser une méthode telle que décrite dans le document WO2006/077437 pour introduire le milieu gazeux à une pression donnée dans la fibre optique à coeur creux 16.

Selon une première application illustrée sur la figure 1, le dispositif d'excitation d'une fibre optique à coeur creux peut être utilisé pour générer une source lumineuse localisée. Dans ce cas, la puissance utilisée est faible. Comme illustré sur la figure 1, le micro-plasma 50 produit dans le coeur de la fibre 16 est localisé.

Selon un mode de réalisation décrit pour cette application, la fibre optique à coeur creux 16 comprend à chaque extrémité des cavités 48, 48' sous forme de réservoirs à gaz, au moins l'une des deux cavités comprenant une paroi transparente appelée fenêtre 52 pour permettre au rayon lumineux produit de sortir de l'enveloppe 12, ladite fenêtre 52 étant disposée dans le prolongement de ladite fibre 16. En variante, la fibre optique à coeur creux 16 pourrait comprendre à chacune de ses extrémités un élément obturateur dont au moins un est transparent pour le rayon lumineux produit au niveau du coeur de la fibre 16. Selon une autre application illustrée sur les figures 2, 7 et 8, le dispositif d'excitation d'une fibre optique à coeur creux peut être utilisé pour générer une source laser à gaz. Dans ce cas, la puissance utilisée est plus importante que pour l'application précédente. La puissance est comprise entre 1 et 100 W. Comme illustré sur la figure 2, le plasma produit à l'intérieur de la fibre est distribué et s'étend au-delà de la zone couverte par le dispositif d'excitation.

Selon un mode de réalisation décrit pour cette application, la fibre optique à coeur creux 16 comprend à chaque extrémité des cavités 48, 48' sous forme de réservoirs à gaz, les deux cavités comprenant un miroir 54, 54' pour obtenir un phénomène d'amplification, l'un des miroirs 54' étant semi-réfléchissant pour permettre au rayon laser 56 produit par la source de sortir de l'enveloppe 12, les miroirs 54, 54' étant disposés dans le prolongement de ladite fibre 16. Les cavités 48 et 48' peuvent être utilisées pour introduire le milieu gazeux dans l'enveloppe, pour la vidanger ou contrôler la pression du milieu gazeux. A cet effet, les cavités 48 et 48' peuvent être équipées de vannes et de manomètres. De préférence, au moins l'une des cavités comprend une fenêtre pour permettre de visualiser le rayon 56 émis.

En variante, les cavités 48, 48' peuvent être remplacées par des cellules photoniques. Dans ce cas, la fibre optique à coeur creux 16 est soudée à chaque extrémité à un tronçon 58 de fibre pleine, l'un de ces tronçons assurant la fonction d'élément réfléchissant l'autre d'élément semi-réfléchissant.

Selon les besoins, la fibre optique à coeur creux peut être plus ou moins longue. Ainsi, sa longueur peut varier de 1 cm à 100 m.

En fonction de la compacité recherchée, la fibre 16 peut être sensiblement rectiligne comme illustré sur la figure 7, ou être enroulée ou former une boucle comme illustré sur la figure 8.

Selon les cas, la source laser peut comprendre un dispositif d'excitation 14 associé à une fibre 16 ou plusieurs dispositifs d'excitation 14 associés à une même fibre 16 comme illustré sur les figures 7 et 8. Selon une variante ultime, toute la longueur de la fibre 16 peut être soumise à une excitation par l'intermédiaire soit d'un dispositif d'excitation qui s'étend sur toute sa longueur ou soit de plusieurs dispositifs d'excitation répartis sur toute sa longueur.

Selon un autre agencement, au moins un des miroirs délimitant la cavité optique d'amplification n'est pas nécessairement placé à l'une des extrémités de la fibre optique à coeur creux 16. Au moins un des miroirs peut être distant d'une des extrémités de la fibre optique 16. Ainsi des micro-miroirs peuvent être insérés dans la fibre optique à coeur creux 16 ou un réseau de Bragg peut être formé dans la gaine microstructurée dans le cas d'une fibre optique microstructurée à coeur creux.

Sur le plan structurel, il est possible de prévoir un ou des systèmes de refroidissement pour refroidir la fibre 16 au niveau du ou des dispositifs d'excitation 14.

Sur le plan fonctionnel, le rayon 56 émis est polychromatique. La composition du milieu gazeux permet de déterminer les longueurs d'onde des différentes raies obtenues. La pression du milieu gazeux permet de favoriser certaines raies par rapport à d'autres. Les paramètres opto-géométriques de la fibre optique à coeur creux 16 peuvent permettre d'assurer la fonction de filtre fréquentiel afin de filtrer spectralement certaines raies et d'en favoriser d'autres.

En outre, il est possible de choisir la fibre 16 en fonction de son diamètre ou d'ajuster la puissance et la fréquence des ondes utilisées pour l'excitation du milieu gazeux pour ajuster la longueur du plasma et/ou certains paramètres du rayon émis 56, notamment sa puissance.

Enfin, la source laser peut aussi bien fonctionner en régime continu qu'en régime pulsé.

Sur le plan expérimental, en choisissant un capillaire diélectrique avec un coeur creux de 107 *µ*m de diamètre comme fibre 16, de l'argon comme milieu gazeux avec une pression de 3 bars et une puissance d'excitation de 47 W avec une fréquence de 2,45 GHz, il est possible d'observer un plasma relativement stable. Avec une puissance d'excitation de 35 W et une pression de 2,8 bars, la puissance optique du faisceau lumineux est de l'ordre de 5 mW et on obtient un faisceau quasi-monomode.

Les avantages procurés par l'invention sont les suivants :
Contrairement à un laser à gaz de l'art antérieur, le faisceau lumineux émis est piégé dans le coeur de la fibre optique et se trouve guidé par ladite fibre jusqu'à la sortie de la source. Cet avantage permet ainsi d'obtenir une source laser compacte ne nécessitant pas un jeu complexe d'éléments optiques pour déporter le faisceau lumineux. Compte tenu de l'absence du jeu complexe d'éléments optiques, les coûts liés au réglage desdits éléments et à leurs entretiens sont supprimés. De plus, le fait que le rayonnement émis soit guidé assure en sortie de fibre une qualité spatiale de faisceau supérieure à celle procurée par les dispositifs de l'art antérieur.

Selon un autre aspect, la source laser est compacte dans la mesure où la fibre 16 peut s'enrouler si nécessaire.

Selon un autre aspect, la source laser a des coûts d'exploitation réduits compte tenu du fait qu'elle ne nécessite pas d'entretien d'électrodes et que la puissance requise pour produire le faisceau lumineux est réduit.

Enfin, selon un autre aspect, les choix combinés de la composition et de la pression du milieu gazeux ainsi que de la fibre optique à coeur creux 16 en fonction notamment de ses paramètres opto-géométriques permettent d'obtenir une source laser émettant des raies fines et extrêmement stables en fréquence aussi bien dans l'ultraviolet, le visible que l'infrarouge.

Le dispositif d'excitation selon l'invention permet de pouvoir créer des sources lumineuses lasers compactes, flexibles, à bas coût, émettant un rayonnement dans les domaines non conventionnels comme l'ultraviolet ou l'infrarouge moyen. Un rayonnement ultraviolet profond de l'ordre de 100 à 300 nm pourrait être utilisé pour la conception de composants micro-électroniques obtenus par photolithographie.

Toutefois, d'autres applications pourraient être envisagées comme par exemple le traitement des eaux usées, l'ablation de certains tissus ou le remodelage de la rétine dans le domaine médical.

## Revendications

1. Ensemble comprenant une enveloppe (12) contenant un milieu gazeux (10) et un dispositif d'excitation (14) du milieu gazeux (10) contenu dans l'enveloppe (12), ledit dispositif étant couplé à ladite enveloppe (12) et disposé à l'extérieur de ladite enveloppe (12) et comprenant un applicateur susceptible de générer sur au moins une portion de ladite enveloppe (12) une excitation latérale à l'intérieur de ladite enveloppe (12), **caractérisé en ce que** l'enveloppe (12) est une fibre optique à coeur creux (16) dont le coeur a un diamètre inférieur à 300 *µ*m et **en ce que** l'applicateur est de type micro-onde et permet de générer une onde de surface apte à créer et confiner un micro-plasma à partir du milieu gazeux contenu dans l'enveloppe (12).

2. Ensemble selon la revendication 1, **caractérisé en ce que** le diamètre du coeur creux (16) varie de 1 à 200 *µ*m.

3. Ensemble selon la revendication 1 ou 2, **caractérisé en ce que** l'enveloppe (12) présente une atténuation linéique inférieure à 10 dB/m.

4. Ensemble selon l'une quelconque des revendications précédentes, **caractérisé en ce que** l'applicateur micro-onde se présente sous la forme d'une ligne microruban (20) comprenant un plan de masse (22), une couche diélectrique (24), une ligne conductrice (26), la fibre optique à coeur creux (16) étant disposée entre le plan de masse (22) et la ligne conductrice (26).

5. Ensemble selon l'une quelconque des revendications 1 à 3, **caractérisé en ce que** l'applicateur micro-onde comprend une enceinte métallique (36) annulaire coaxiale à la fibre (16) avec un espace annulaire (44) et une alimentation apte à fournir un signal haute fréquence d'excitation comportant un élément métallique (46) disposé dans l'enceinte métallique (36).

6. Ensemble selon la revendication 5, **caractérisé en ce que** l'élément métallique (46) se présente sous la forme d'une boucle.

7. Ensemble selon la revendication 6, **caractérisé en ce que** la boucle s'étend dans un plan contenant la direction longitudinale de la fibre (16) et a une forme en U à l'intérieur de l'enceinte métallique.

8. Ensemble selon l'une quelconque des revendications 5 à 7, **caractérisé en ce que** l'espace annulaire (44) a une longueur variant de 1 à 5 mm.

9. Ensemble selon l'une quelconque des revendications 5 à 8, **caractérisé en ce que** l'enceinte métallique (36) annulaire est délimitée par une première paroi cylindrique creuse (32) dont le diamètre intérieur est légèrement supérieur au diamètre extérieur de la fibre (16).

10. Ensemble selon l'une quelconque des revendications précédentes, **caractérisé en ce que** l'enveloppe (12) comprend une fibre optique (16) à coeur creux et au moins une cavité (48) prévue à au moins une des extrémités de ladite fibre (16).

11. Ensemble selon l'une quelconque des revendications précédentes, **caractérisé en ce que** l'enveloppe (12) est constituée d'une fibre optique (16) obturée à chaque extrémité.

12. Source de lumière comprenant un ensemble selon l'une quelconque des revendications précédentes.

13. Source laser comprenant un ensemble selon l'une quelconque des revendications 1 à 11.

14. Source laser selon la revendication 13, **caractérisée en ce que** la fibre optique à coeur creux (16) est soudée à chaque extrémité à un tronçon (58) de fibre pleine, l'un de ces tronçons assurant la fonction d'élément réfléchissant l'autre d'élément semi-réfléchissant.

15. Source laser selon la revendication 14, **caractérisée en ce qu'**au moins un des miroirs délimitant la cavité optique est distant de l'extrémité de la fibre optique (16) à coeur creux.

16. Source laser selon l'une quelconque des revendications 13 à 15, **caractérisée en ce que** la fibre optique à coeur creux (16) est une fibre optique microstructurée.

17. Source laser selon l'une quelconque des revendications 13 à 15, **caractérisée en ce que** la fibre optique à coeur creux (16) est un capillaire diélectrique avec un trou d'air entouré d'une gaine diélectrique multicouches.

18. Procédé d'émission d'un faisceau laser à partir d'une source laser selon l'une quelconque des revendications 13 à 17, **caractérisé en ce qu'**il consiste à utiliser les paramètres opto-géométriques de la fibre optique (16) à coeur creux pour assurer la fonction de filtre fréquentiel.

## Patentansprüche

1. Anordnung mit einem Kolben (12), der ein Gasmedium (10) und eine Anregevorrichtung (14) für das Gasmedium (10) in dem Kolben (12) enthält, wobei diese Vorrichtung mit dem Kolben (12) gekoppelt und außerhalb des Kolbens (12) angeordnet ist und einen Applikator umfasst, der mindestens in einem Abschnitt des Kolbens (12) eine seitliche Anregung innerhalb des Kolbens (12) erzeugen kann, **dadurch gekennzeichnet, dass** der Kolben (12) eine Glasfaser mit hohlem Kern (16) ist, deren Kern einen Durchmesser von unter 300 µm hat und dadurch, dass der Applikator mikrowellenwartig ist und eine Oberflächenwelle erzeugen kann, die anhand des Gasmediums im Kolben (12) ein Mikroplasma erzeugen und einschließen kann.

2. Anordnung nach Anspruch 1, **dadurch gekennzeichnet, dass** der Durchmesser des hohlen Kerns (16) zwischen 1 und 200 µm schwankt.

3. Anordnung nach Anspruch 1 oder 2, **dadurch gekennzeichnet, dass** der Kolben (12) eine lineare Schwächung von unter 10 dB/m aufweist.

4. Anordnung nach einem der vorausgehenden Ansprüche, **dadurch gekennzeichnet, dass** der Mikrowellen-Applikator die Form eines Mikrostrips (20) annimmt, der ein Layout (22), eine dielektrische Schicht (24) und einen Leiter (26) umfasst, wobei die Glasfaser mit hohlem Kern (16) zwischen dem Layout (22) und dem Leiter (26) angeordnet ist.

5. Anordnung nach einem der Ansprüche 1 bis 3, **dadurch gekennzeichnet, dass** der Mikrowellen-Applikator ein zur Faser (16) koaxiales ringförmiges Metallgehäuse (36) mit einem Ringabstand (44) und einer Versorgung umfasst, die ein Hochfrequenz-Triggersignal abgeben kann und ein im Metallgehäuse (36) angeordnetes Metallelement (46) umfasst.

6. Anordnung nach Anspruch 5, **dadurch gekennzeichnet, dass** das Metallelement (46) eine Schleifenform aufweist.

7. Anordnung nach Anspruch 6, **dadurch gekennzeichnet, dass** sich die Schleife in einer die Längsrichtung der Faser (16) enthaltenden Ebene erstreckt und innerhalb des Metallgehäuses U-förmig ist.

8. Anordnung nach einem der Ansprüche 5 bis 7, **dadurch gekennzeichnet, dass** die Länge des Ringabstands (44) zwischen 1 und 5 mm schwankt.

9. Anordnung nach einem der Ansprüche 5 bis 8, **dadurch gekennzeichnet, dass** das ringförmige Metallgehäuse (36) durch eine erste zylinderförmige hohle Wand (32) abgegrenzt ist, deren Innendurchmesser geringfügig größer ist als der Außendurchmesser der Faser (16).

10. Anordnung nach einem der vorausgehenden Ansprüche, **dadurch gekennzeichnet, dass** der Kolben (12) eine Glasfaser (16) mit hohlem Kern und mindestens einen Hohlraum (48) umfasst, der an mindestens einem der Enden dieser Faser (16) vorgesehen ist.

11. Anordnung nach einem der vorausgehenden Ansprüche, **dadurch gekennzeichnet, dass** der Kolben (12) aus einer an beiden Enden geschlossenen Glasfaser (16) besteht.

12. Lichtquelle, eine Anordnung nach einem der vorausgehenden Ansprüche umfassend.

13. Laserquelle, eine Anordnung nach einem der Ansprüche 1 bis 11 umfassend.

14. Laserquelle nach Anspruch 13, **dadurch gekennzeichnet, dass** die Glasfaser mit hohlem Kern (16) an jedem Ende mit einem vollen Faserstück (58) verschweißt ist, wobei eines dieser Stücke die Funktion eines reflektierenden Elements und das andere die Funktion eines halbdurchlässigen Elements übernimmt.

15. Laserquelle nach Anspruch 14, **dadurch gekennzeichnet, dass** mindestens einer der den optischen Hohlraum abgrenzenden Spiegel vom Ende der Glasfaser (16) mit hohlem Kern beabstandet ist.

16. Laserquelle nach einem der Ansprüche 13 bis 15, **dadurch gekennzeichnet, dass** die Glasfaser mit hohlem Kern (16) eine mikrostrukturierte Glasfaser ist.

17. Laserquelle nach einem der Ansprüche 13 bis 15, **dadurch gekennzeichnet, dass** die Glasfaser mit hohlem Kern (16) eine dielektrische Kapillare mit einem von einer mehrschichtigen dielektrischen Hülle umhüllten Luftloch ist.

18. Emissionsverfahren eines Laserstrahls ausgehend von einer Laserquelle nach einem der Ansprüche 13 bis 17, **dadurch gekennzeichnet, dass** es darin besteht, die optogeometrischen Parameter der Glasfaser (16) mit hohlem Kern zu nutzen, um die Frequenzfilterfunktion zu gewährleisten.

## Claims

1. An assembly comprising an enclosure (12) containing a gaseous medium (10) and a device (14) for exciting the gaseous medium (10) contained in the enclosure (12), said device being coupled to said enclosure (12) and disposed outside said enclosure (12) and comprising an applicator able to generate, on at least a portion of said enclosure (12), a lateral excitation inside said enclosure (12), **characterised in that** the enclosure (12) is a hollow-core optical fibre (16), the core of which has a diameter of less than 300 µm, and **in that** the applicator is of the microwave type and makes it possible to generate a surface wave able to create and confine a microplasma from the gaseous medium contained in the enclosure (12) .

2. An assembly according to claim 1, **characterised in that** the diameter of the hollow core (16) varies from 1 to 200 µm.

3. An assembly according to claim 1 or 2, **characterised in that** the enclosure (12) has an attenuation per unit length of less than 10 dB/m.

4. An assembly according to any of the preceding claims, **characterised in that** the microwave applicator is in the form of a microribbon line (20) comprising an earth plane (22), a dielectric layer (24) and a conductive line (26), the hollow-core optical fibre (16) being disposed between the earth plane (22) and the conductive line (26).

5. An assembly according to any of claims 1 to 3, **characterised in that** the microwave applicator comprises an annular metal chamber (36) coaxial with the fibre (16) with an annular space (44) and a power supply able to provide a high-frequency excitation signal, comprising a metal element (46) disposed in the metal chamber (36).

6. An assembly according to claim 5, **characterised in that** the metal element (46) is in the form of a loop.

7. An assembly according to claim 6, **characterised in that** the loop lies in a plane containing the longitudinal direction of the fibre (16) and has a U shape inside the metal chamber.

8. An assembly according to any of claims 5 to 7, **characterised in that** the annular space (44) has a length varying from 1 to 5 mm.

9. An assembly according to any of claims 5 to 8, **characterised in that** the annular metal chamber (36) is delimited by a first hollow cylindrical wall (32), the inside diameter of which is slightly greater than the outside diameter of the fibre (16).

10. An assembly according to any of the preceding claims, **characterised in that** the enclosure (12) comprises a hollow-core optical fibre (16) and at least one cavity (48) provided at at least one of the ends of said fibre (16).

11. An assembly according to any of the preceding claims, **characterised in that** the enclosure (12) comprises an optical fibre (16) closed at each end.

12. A light source comprising an assembly according to any of the preceding claims.

13. A laser source comprising an assembly according to any of claims 1 to 11.

14. A laser source according to claim 13, **characterised in that** the hollow-core optical fibre (16) is welded at each end to a solid-fibre portion (58), one of these portions fulfilling the function of an element reflecting the other semi-reflective element.

15. A laser source according to claim 14, **characterised in that** at least one of the mirrors delimiting the optical cavity is distant from the end of the hollow-core optical fibre (16).

16. A laser source according to any of claims 13 to 15, **characterised in that** the hollow-core optical fibre (16) is a microstructured optical fibre.

17. A laser source according to any of claims 13 to 15, **characterised in that** the hollow-core optical fibre (16) is a dielectric capillary with an air hole surrounded by a multilayer dielectric sheath.

18. A method for emitting a laser beam from a laser source according to any of claims 13 to 17, **characterised in that** it comprises using the optogeometric parameters of the hollow-core optical fibre (16) for providing the frequency filter function.
